# EUROPÄISCHE PATENTSCHRIFT

(11) **EP 0 580 614 B1**
(45) Veröffentlichungstag und Bekanntmachung des Hinweises auf die Patenterteilung: **28.07.1999**
(21) Anmeldenummer: 92906917.7
(22) Anmeldetag: 26.03.1992
(51) Int. Cl.: E01B 9/14, F16B 13/14, C09J 11/00

(54) **VERFAHREN UND MITTEL ZUM VERANKERN VON BEFESTIGUNGSELEMENTEN IN BOHRLÖCHERN**
PROCESS AND MEANS FOR ANCHORING FASTENING ELEMENTS IN BOREHOLES
PROCEDE ET DISPOSITIF POUR ANCRER DES ELEMENTS DE FIXATION DANS DES TROUS FAITS PAR UN FORET

(30) Priorität: 13.04.1991 DE 4112153; 28.11.1991 DE 4139069
(43) Veröffentlichungstag der Anmeldung: 02.02.1994
(73) Patentinhaber: MARMORIT GmbH, 79283 Bollschweil (DE)
(72) Erfinder: IHLE, Clausdieter, D-7840 Müllheim 14 (DE); BANHARDT, Volker, D-7801 Ballrechten-Dottingen (DE)
(74) Vertreter: Werner, Hans-Karsten, Dr.Dipl.-Chem.
(86) Internationale Anmeldenummer: EP9200671
(87) Internationale Veröffentlichungsnummer: WO9218697

(56) Entgegenhaltungen:
- EP-A- 0 319 736
- DE-A- 2 413 479
- DE-B- 1 948 339
- FR-A- 1 296 107
- GB-A- 470 761
- GB-A- 474 236
- GB-A- 500 109
- GB-A- 736 164
- GB-A- 2 025 557
- US-A- 2 110 053
- US-A- 4 152 185
- US-A- 4 198 793
- US-A- 4 738 878
- I. SKEIST: "Handbook of adhesives", 2. Auflage, herausgegeben von Van Nostrand Reinhold Cy., New York, US, 1977, Kapitel 26 (Epoxy resin adhesives) und 27 (Polyurethane and Isocyanate - based adhesives), siehe Seite 442, Abschnitt: "Fillers, Reinforcements and other Additives"

## Beschreibung

Gegenstand der vorliegenden Erfindung ist vor allem ein Verfahren zum Verankern von Befestigungselementen, insbesondere von Schrauben, Nägeln, Ankern, Spanneisen und Bolzen in Bohrlöchern mit Hilfe von Zweikomponentenklebern und Metalleinlagen, insbesondere in älteren, sanierungsbedürftigen Bohrlöchern von Schwellen in Gleisanlagen, aber auch in Bohrlöchern von Böden, Wänden oder Decken aus Holz, Beton, Stahl oder Mauerwerk. Schwellen, Böden, Wände und Decken werden im Sinne der Erfindung als Unterlagen bezeichnet.

Ein Verfahren zum Festlegen von Schrauben oder Nägeln, insbesondere von Schwellenschrauben oder Schienennägeln in verrottbarem Material, ist bekannt aus dem deutschen Patent 19 48 339 sowie der Zusatzanmeldung 24 13 479. Als Metalleinlage werden hierin speziell geformte Spannstücke oder aber röhrenförmige Drahtnetze oder Drahtgitter verwendet. Dieses Verfahren hat sich zwar in der Paxis bewährt, jedoch nur dann, wenn die Dimensionen des Bohrloches und der Metalleinlagen gut aufeinander abgestimmt sind. Für Bohrlöcher mit verschiedenem Bohrlochdurchmesser sind zur optimalen Befestigung verschieden dimensionierte Metalleinlagen nötig. Da derartige Arbeiten meist nur von ungelerntem oder angelerntem Personal durchgeführt werden, besteht die Gefahr einer unsachgemäßen Auswahl der Metalleinlagen und damit nicht zufriedenstellender Ergebnisse. Ein weiterer Nachteil des bekannten Verfahrens besteht darin, daß nach dem Anziehen der Schrauben mit dem gewünschten Drehmoment die Schraube nicht mehr gelöst werden soll. Es besteht jedoch oftmals das Bedürfnis, kurz nach dem ersten Anziehen die Schraube noch einmal zu lösen und Korrekturen an dem zu befestigenden System vorzunehmen.

Ein weiterer Nachteil des bekannten Verfahrens besteht darin, daß der Zweikomponentenkleber vorgemischt werden muß, bevor er in das Bohrloch eingefüllt werden kann. Es müssen somit stets relativ kleine Mengen neu angesetzt werden, da nach wenigen Minuten die Abbindung des fertig gemischten Zweikomponentenklebers beginnt.

EP-A-0 319 736 beschreibt ein Verfahren zum Befestigen von Ankerstangen in Beton, Kunststein und sonstigem Gestein, bei dem mindestens in einem hinterschnittenen Einbindebereich der Verbundmasse Stahlnadeln in Wirrlage eingebracht werden, wobei eine geeignete Verbundmasse derart ausgebildet ist, daß in ihr Stahlnadeln eingelagert sind.

US-P-4,198,793 beschreibt ein Verfahren zur Befestigung einer Schraube in einem Bohrloch, bei dem nach Einführung der Schraube in das Bohrloch der umgebende Raum mit einer Vielzahl von Kugeln verfüllt wird und anschließend ein flüssiges, härtbares Harz in das Bohrloch gefüllt wird, um die Zwischenräume zwischen den Kugeln auszufüllen, und das Harz anschließend gehärtet wird.

Die Erfindung hat sich die Aufgabe gestellt, das bekannte Verfahren zu verbessern und zu vereinfachen und dabei die oben aufgeführten Nachteile zu vermeiden. Darüber hinaus soll das erfindungsgemäße Verfahren auch für Bohrlöcher in Decken (Überkopfarbeiten) und Wänden geeignet sein.

Diese Aufgabe kann überraschenderweise dadurch gelöst werden, daß
a) zunächst die Bohrlöcher etwa zur Hälfte bis drei Viertel mit einem verdichtungsfähigen Gemisch aus hochverschleißfesten Fasern oder Spänen aus Metallen, Polymeren und/oder Keramik mit durchschnittlichen Längen kleiner als der halbe Bohrlochdurchmesser gefüllt werden, danach gegebenenfalls ein Blocker zugegeben wird, dann nacheinander oder gleichzeitig die beiden Komponenten des Klebers eingebracht und danach der restliche Teil der erforderlichen Menge an Fasern oder Spänen eingefüllt wird oder
b) aus einem verdichtungsfähigen Gemisch aus hochverschleißfesten Fasern oder Spänen mit durchschnittlichen Längen kleiner als der halbe Bohrlochdurchmesser und den beiden Komponenten des Klebers eine knetbare Masse hergestellt wird, diese Masse in die Bohrlöcher eingedrückt wird
danach bei Verwendung von Befestigungselementen ohne selbstschneidendem Gewinde zunächst ein Zentrumsloch vorgeformt wird und danach das jeweilige Befestigungselement eingesetzt und gegebenenfalls befestigt wird.

Während Variante a) des erfindungsgemäßen Verfahrens besonders für Bohrlöcher in Gleisanlagen, insbesondere in sanierungsbedürftigen Schwellen, oder für Bohrlöcher in Böden geeignet ist, wird Variante b) für Bohrlöcher in Wand- und Deckenkonstruktionen angewendet. Für keine Variante des Verfahrens ist der Untergrund von Bedeutung. Dieser kann aus Holz, Beton, Stahl oder Mauerwerk bestehen.

Bei dem erfindungsgemäßen Verfahren ist es nicht notwendig, die beiden Komponenten des Klebers vorzumischen. Sie können vielmehr nacheinander oder gleichzeitig auch im unvermischten Zustand in das Bohrloch eingegeben oder zur knetbaren Masse mit den Fasern oder Spänen vermischt werden. Die erfindungsgemäß verwendete Einlage in Forn von Fasern oder Spänen sorgt für eine gute und ausreichende Durchmischung der Komponenten im Bohrloch.

Weiterhin gestattet es das erfindungsgemäße Verfahren, als Befestigungselemente Schrauben einzusetzen und mit dem vorgesehenen Drehmoment anzuziehen. Hierdurch kommt es zu einer sofortigen kraftschlüssigen Verbindung zwischen der Schraube und der Bohrlochwandung. Es ist sogar möglich, die Schraube während der Topfzeit der Flüssigkeitskomponenten mehrmals zu lösen und wieder fest anzuziehen, ohne dadurch das gute Endergebnis zu gefährden. Anzugsdrehmomente bis 500 Nm können problemlos erreicht werden. Das Lösedrehmoment liegt dabei um 200 Nm.

Ausreißversuche an Schrauben, die mit dem erfindungsgemäßen Verfahren in 30 Jahre alte Schellen eingebaut wurden, haben gezeigt, daß bei einem Anzugsdrehmoment von ca. 50Nm eine Ausreißkraft bis zu 67 kN notwendig ist.

Nach der Topfzeit der Flüssigkeitskomponenten, d.h. während der Erhärtungsphase soll die Schraubverbindung möglichst nicht mehr gelöst oder angezogen werden. Diese Erhärtungsphase dauert im allgemeinen zwei bis fünf Stunden. Die Härtungsdauer hängt von der Einstellung des Gemisches, der Umgebungs- und Materialtemperatur ab. Nach der Erhärtungsphase ist es wiederum möglich, die Schraube mehrfach aus- und wieder einzudrehen. Dies kann beispielsweise erforderlich sein, um einen gebrochenen Federring auszutauschen. Für den Fall, daß die Gewindegänge durch verbogene Schrauben beschädigt worden sind, kann in dieses Bohrloch eine neue Schraube eingeklebt werden.

Um das eventuelle Entfernen der Schraube nach dem Erhärten zu erleichtern, ist es vorteilhaft, die Schraube vor dem Verankern im Bohrloch mit einem öligen Lappen abzureiben, d. h. Öl dient als Trennmittel zwischen Schraube und erhärtetem Gemisch aus Metall spänen und Zweikomponentenkleber.

Als Komponenten A und B des Klebers haben sich vor allem bewährt eine Flüssigkeitskomponente A mit der Formulierung aus aliphatischen und cycloaliphatischen Epoxidharzen, mono- und bifunktionellen Reaktivverdünnern und Haftvermittlern, und eine Flüssigkeitskomponente B mit der Formulierung aus aliphatischen und/oder cycloaliphatischen Polyaminen, Polyamidoaminen, Mannichbasen sowie Haftvermittlern und gegebenenfalls Beschleunigern.

Gute Ergebnisse werden auch erzielt, wenn als Komponenten C und D des Klebers verwendet werden eine Flüssigkeitskomponente C mit der Formulierung von Diisocyanaten mit Haftvermittlern und -üblichen Zusätzen und als Flüssigkeitskomponente D eine Formulierung von mehrfunktionellen Alkoholen mit Haftvermittlern und Hilfsmitteln.

Für extreme Fälle, d. h. zum Sanieren von Durchgangslöchern zum Beispiel in Gleisanlagen, werden 1 bis 2 Tropfen eines Blockers zugegeben, der bewirkt, daß sich das Klebesystem der zwei Komponenten des Klebers bei der Vermischung mit Metallspänen verdickt. Durch dieses Verdicken oder Stocken des Materials wird ein Herausfallen durch das nach unten offene Schraubloch verhindert. Als Blocker für das erfindungsgemäße Verfahren sind niedrigviskose Diisocyanate und Methacrylate geeignet.

Um den an das instabile Loch angrenzenden Teil der Unterlage aus Holz, Mauerwerk oder auch Beton zu sanieren, kann den zwei Komponenten des Klebers A und B oder C und D ein niedermolekulares Fungizid zugesetzt werden, welches durch Diffusion langsam nach außen in den maroden Teil der Unterlage (z. B. Holzschwelle) eindringt und somit mittelfristig einen weiteren Befall durch Pilze verhindert oder zumindest verlangsamt.

Die Fungizide müssen mit den entsprechenden Komponenten verträglich sein, ohne mit diesen zu reagieren. Außerdem muß ihre Molekülgröße klein, d. h. das Molekulargewicht relativ niedrig sein. Dies ist erforderlich, um die Diffusion des Fungizides aus der Klebermatrix ins angrenzende Holz oder Mauerwerk nicht unnötig zu behindern.

Die ideale Molekülgröße bzw. das ideale Molekulargewicht ist abhängig von der mittleren Größe bzw. vom mittleren Molekulargewicht der Kleberkomponenten und der Maschenwerte" des bei der Bindung aufgebauten räumlichen Netzwerkes. Enge "Maschen" erfordern kleinere Moleküle, größere "Maschen" erlauben größere Moleküle. Große "Maschen" im Raumgitter der Klebermatrix erlauben eine raschere Diffusion als kleine Maschen.

Erfindungsgemäß werden den zwei Komponenten des Klebers als niedermolekulares Fungizid beispielsweise Rowalin GZ (Biochema Schwaben, Dr. Lehmann & Co., Memmingen), Rodurol F2 (Biochema Schwaben, Dr. Lehmann & Co., Memmingen) oder Konservan RT (ThorChemie GmbH, Speyer) in einer Menge von 0,25 bis 10 Gew.-% bezogen auf die beiden Komponenten des Klebers zugesetzt. Vorzugsweise wird Rowalin GZ in einer Menge von 0,25 bis 3,5 Gew.-% (bezogen auf die zwei Komponenten des Klebers) verwendet.

Der Arbeitsablauf für eine Schraublochsanierung bei Gleiskörpern findet beispielsweise folgendermaßen statt:
1. Die alte Schraube wird aus dem beschädigten Loch der Schwelle entfernt. Die Schraube wird vor der Wiederverwendung mit einem Lappen von grobem Schmutz, Öl und Fettrückständen befreit.
2. Das Schraubloch wird von losen Schmutz- und Feststoffteilen sowie von mürbem Holz bei Holzschwellen gesäubert. Dies kann gegebenenfalls auch durch weiteres Aufbohren geschehen.
3. Es wird etwa die Hälfte des verdichtungsfähigen Gemisches aus hochverschleißfesten Metallspänen mit durchschnittlichen Längen kleiner als der halbe Bohrlochdurchmesser eingefüllt.
   Bei einem Lochdurchmesser von 26 mm sind Späne aus hochverschleißfesten Metallen oder Legierungen geeignet mit einer Länge von 0,1 bis 15 mm. Vorzugsweise werden Späne mit Längen von 0,1 bis 7 mm eingesetzt. Insbesondere wenn die Länge der Späne unterschiedlich ist und eine relativ breite Sieblinie aufweist, ist das Gemisch gut verdichtungsfähig.
4. Es wird die Flüssigkeitskomponente A eingefüllt (bei Urethanklebern Flüssigkeitskomponente C).
5. Es wird die Flüssigkeitskomponente B eingefüllt (bei Urethanklebern Flüssigkeitskomponente D).
   Es ist durchaus möglich, die Komponenten A und B (bei Urethanklebern die Komponenten C und D) vorzumischen und als Gemisch einzufüllen.
6. Es wird die erforderliche Restmenge an Spänen bis ca. 1 cm unter den Rand des Bohrlochs eingefüllt.
7. Bei der Verwendung von Schrauben mit einem nicht selbstschneidenden Gewinde muß mit Hilfe eines Dorns o. ä. ein Zentrumsloch vorgeformt werden.
8. Es wird die Schraube eingesetzt und mit dem dafür vorgesehenen Drehmoment angezogen.

Mit dieser auch für ungelerntes Personal einfachen Verfahrensweise wird eine Leistung von ca. 180 sanierten Schraubenlöchern pro Stunde erreicht.

Wie oben beschrieben ist das erfindungsgemäße Verfahren nicht nur zur Verankerung von Schrauben in sanierungsbedürftigen Bohrlöchern von Gleisanlagen geeignet, sondern generell zum Verankern von Befestigungselementen, insbesondere Nägeln, Ankern, Spanneisen und Bolzen in Bohrlöchern, beispielsweise in Betonböden, aber vor allem auch in Wand- und Deckenkonstruktionen (Variante b). Die gemäß Variante b) hergestellte knetbare Masse wird in die vorgefertigten Löcher der Wand- oder Deckenkonstruktion eingedrückt, das Befestigungselement in diesen Feststoffknetdübel eingedrückt oder eingeschraubt und festgezogen. In der Regel hat die Schraube einen um 2 mm geringeren Durchmesser als das Loch. Aber auch zu kleine Schrauben mit noch geringerem Durchmesser oder andere Befestigungselemente lassen sich mit dem erfindungsgemäßen Verfahren kraftschlüssig anlegen. Da die knetbare Masse erst nach 2 bis 5 Stunden erhärtet, lassen sich mit einer größeren Menge einmal hergestellter Dübelmasse eine große Anzahl von Bohrlöchern dübeln. Die Bohrlochgröße spielt daher eine untergeordnete Rolle, da sich die Masse sowohl für große als auch für kleine Bohrlöcher eignet.

Besonders geeignet ist das erfindungsgemäße Verfahren dann, wenn hohe Anforderungen an die Verankerung gestellt werden und dennoch sowohl bei der Montage wie auch später die Notwendigkeit besteht, die Schraube nochmals zu lockern und wieder anzuziehen.

Gleichzeitig hat das erfindungsgemäße Verfahren unter Zusatz des Fungizids den Vorteil, daß auch der an das Bohrloch angrenzende Teil der Unterlage aus Holz, Mauerwerk oder Beton saniert wird.

Werden als Fasern oder Späne keine Metalle, sondern Polymere oder Keramik verwendet, stellt die fertige Verankerung auch eine gute elektrische Isolierung dar. Dies kann bei der Verankerung von Befestigungselementen für den Oberleitungsbau von großem Vorteil sein.

Gegenstand der vorliegenden Erfindung ist somit zunächst das Verfahren zum Verankern von Befestigungselementen, insbesondere von Schrauben, Nägeln, Ankern, Spanneisen und Bolzen in Bohrlöchern gemäß den Patentansprüchen 1 bis 6. Ein weiterer Gegenstand der Erfindung ist das Mittel zum Verankern von Befestigungselementen in Bohrlöchern, bestehend aus einem verdichtungsfähigen Gemisch aus hochverschleißfesten Fasern oder Spänen mit durchschnittlichen Längen kleiner als der halbe Bohrlochdurchmesser sowie zwei Komponenten eines Klebers und gegebenenfalls einem Blocker. Gemäß Anspruch 8 wird ein Mittel enthaltend ein niedermolekulares Fungizid eingesetzt, um im Bedarfsfall auch die marode, durch Pilze befallene Umgebung des Bohrloches zu sanieren. Bevorzugt weist das eingesetzte Mittel ein Mengenverhältnis zwischen dem Gemisch an Fasern oder Spänen (Feststoffanteil) und den zwei Komponenten des Klebers sowie gegebenenfalls dem Blocker und dem Fungizid (Flüssiganteil) von 90 Masse% zu 10 Masse% auf.

Schließlich betrifft die Erfindung die Verwendung von verdichtungsfähigen Gemischen aus hochverschleißfesten Fasern oder Spänen mit durchschnittlichen Längen kleiner als der halbe Bohrlochdurchmesser als Einlage in Zweikomponentenklebern zur Verankerung von Befestigungselementen wie Schrauben in Bohrlöchern gemäß den Patentansprüchen 10 und 11.

In den nachfolgenden Beispielen sind bevorzugte Ausführungsformen des erfindungsgemäßen Verfahrens näher erläutert:

### Beispiel 1

Sanierungsbedürftige Schwellen wurden ca. 180 mm tief und 26 mm breit aufgebohrt. In die Bohrlöcher wurden Metallspäne eingefüllt, welche Längen von 3 bis 7 mm aufwiesen. Nur ca. 3% ± 2% wiesen eine Länge von < 3 mm auf. Weniger als 5% wiesen eine Länge über 7 mm auf. Als nächstes wurden 10 bis 15 g eines frisch bereiteten Zweikomponentenklebers verwendet. Der Zweikomponentenkleber bestand aus einer Flüssigkeitskomponente A bestehend aus einer Formulierung aus aliphatischen und cycloaliphatischen Epoxidharzen, mono- und bifunktionellen Reaktivverdünnern sowie Haftvermittlern zur Steuerung der Rheologie, und einer Flüssigkeitskomponente B bestehend aus einer Formulierung aus aliphatischen und cycloaliphatischen Polyaminen, Polyamidoaminen, Haftvermittlern und Beschleunigern. Auf diese Schicht des Zweikomponentenklebers wurde eine Schicht von Metallspänen eingefüllt, welche Durchmesser zwischen 0,1 und 7 mm aufwiesen. Ca. die Hälfte dieser Späne wiesen eine Länge von < 1 mm auf. Nur ca. 15 bis 25% wiesen Längen von 4 bis 7 mm auf. Zur Aufnahme von Schrauben mit einem nicht selbstschneidenden Gewinde wurde ein Zentrumsloch vorgeformt.

In die so vorbereiteten Bohrlöcher wurden übliche Schrauben zur Gleisbefestigung gedreht. Sie konnten auch noch nach 10 Minuten gelockert oder fester angezogen werden. Nach 6 Stunden war der Zweikomponentenkleber so fest abgebunden, daß die Schrauben wieder aus- und eingeschraubt werden konnten, ohne das neue gebildete Gewinde aus verklebten Metallspänen zu zerstören.

### Beispiel 2

Zur Dübelung in bauseits vorgefertigten Löchern oder in neu zu bohrenden Löchern am Boden, an Wänden oder über Kopf wird aus den Komponenten des Klebers A und B bzw. C und D sowie aus hochverschleißfesten Metallspänen eine knetbare Masse hergestellt. Die Metallspäne, deren durchschnittliche Länge kleiner als der halbe Lochdurchmesser sein soll, werden mit den vorgemischten Kleberkomponenten A und B bzw. C und D verknetet. Der Kleberanteil C bezogen auf die Metallspäne hängt von deren Sieblinie und Form ab und beträgt zwischen 5 Masse-% und 15 Masse-%. Der so erhaltene "Feststoffknetdübel" wird in das vorhandene Loch eingedrückt und durch Andrücken verdichtet. Schrauben mit selbstschneidendem Gewinde können dann direkt eingedreht werden. Für Schrauben mit nicht selbstschneidendem Gewinde muß analog zu Beispiel 1 ein Zentrumsloch vorgeformt werden. Die zu verwendende Menge Feststoffknetdübel hängt ab von der Lochgröße und der zu verwendenen Schraube.

Es hat sich gezeigt, daß so auch Schrauben mit einem deutlich kleineren Durchmesser als der Lochdurchmesser kraftschlüssige Verbindungen ergeben.

### Beispiel 3

Beim Bau von Tunneln und Brücken werden Aussparungen und Löcher mit eingeplant, um den später anfallenden Bedarf an Dübellöchern zu decken, ohne den Betonkörper später durch Bohren zu beschädigen. Da jedoch zum Zeitpunkt der Planung der genaue Verwendungszweck des einzusetzenden Befestigungselementes noch nicht genau bekannt ist, wählt man vorsichtshalber den größten benötigten Durchmesser dieser später benötigten Löcher, zum Beispiel 16 mm Durchmesser für starke Schwerlasttanker. Diese Löcher werden gemäß Beispiel 1 oder 2 gefüllt. Dickere Schrauben werden von dem Abbinden eingedreht, dünnere Schrauben können auch nach dem Abbinden eingedreht werden und besitzen gute kraftschlüssige Verbindungen.

## Patentansprüche

1. Verfahren zum Verankern von Befestigungselementen, insbesondere von Schrauben, Nägeln, Ankern, Spanneisen und Bolzen in Bohrlöchern, bei welchem
a) zunächst die Bohrlöcher etwa zur Hälfte bis drei Viertel mit einem verdichtungsfähigen Gemisch aus hochverschleißfesten Fasern oder Spänen aus Metallen, Polymeren und/oder Keramik mit durchschnittlichen Längen kleiner als der halbe Bohrlochdurchmesser gefüllt werden, danach gegebenenfalls ein Blocker zugegeben wird, dann nacheinander oder gleichzeitig die beiden Komponenten des Klebers eingebracht und danach der restliche Teil der erforderlichen Menge an Fasern oder Spänen eingefüllt wird oder
b) aus einem verdichtungsfähigen Gemisch aus hochverschleißfesten Fasern oder Spänen mit durchschnittlichen Längen kleiner als der halbe Bohrlochdurchmesser und den beiden Komponenten des Klebers eine knetbare Masse hergestellt wird, diese Masse in die Bohrlöcher eingedrückt wird
danach bei Verwendung von Befestigungselementen ohne selbstschneidendem Gewinde zunächst ein Zentrumsloch vorgeformt wird und danach das jeweilige Befestigungselement eingesetzt und gegebenenfalls befestigt wird.

2. Verfahren gemäß Anspruch 1, dadurch gekennzeichnet, daß sanierungsbedürftige Bohrlöcher vorher aufgebohrt, gereinigt und entfettet werden.

3. Verfahren gemäß Anspruch 1 oder 2, dadurch gekennzeichnet, daß als Komponenten A und B des Klebers verwendet werden eine Flüssigkeitskomponente A mit der Formulierung aus aliphatischen und cycloaliphatischen Epoxidharzen, mono- und bifunktionellen Reaktivverdünnern und Haftvermittlern, und eine Flüssigkeitskomponente B mit der Formulierung aus aliphatischen und/oder cycloaliphatischen Polyaminen, Polyamidoaminen, Mannichbasen sowie Haftvermittlern und gegebenenfalls Beschleunigern.

4. Verfahren gemäß Anspruch 1 oder 2, dadurch gekennzeichnet, daß als Komponenten C und D des Klebers verwendet werden eine Flüssigkeitskomponente C mit der Formulierung von Isocyanaten mit Haftvermittlern und üblichen Zusätzen und als Flüssigkeitskomponente D eine Formulierung von mehrfunktionellen Alkoholen mit Haftvermittlern und Hilfsmitteln.

5. Verfahren gemäß den Ansprüchen 1 bis 4, dadurch gekennzeichnet, daß zum Verankern von Befestigungselementen in sanierungsbedürftigen Bohrlöchern in Schwellen oder anderen Unterlagen wie Böden, Wänden oder Decken aus Holz, Mauerwerk oder Beton den Komponenten A und B oder C und D des Klebers ein niedermolekulares Fungizid zugesetzt wird.

6. Verfahren gemäß Anspruch 5, dadurch gekennzeichnet, daß als niedermolekulares Fungizid Rowalin GZ, Rodurol F2 oder Konservan RT in einer Menge von 0,25 bis 10 Gew.-% bezogen auf die beiden Komponenten des Klebers, vorzugsweise Rowalin GZ in einer Menge von 0,25 bis 3,5 Gew.-%, zugesetzt wird.

7. Verfahren gemäß Anspruch 1 oder 2, dadurch gekennzeichnet, daß als Blocker 1 - 2 Tropfen eines niedrigviskosen Diisocyanates oder Methacrylates zugegeben werden.

8. Mittel zum Verankern von Befestigungselementen, insbesondere von Schrauben, Nägeln, Ankern, Spanneisen und Bolzen in Bohrlöchern zur Durchführung des Verfahrens gemäß einem der Ansprüche 1 bis 7 bestehend aus einem verdichtungsfähigen Gemisch aus hochverschleißfesten Fasern oder Spänen mit durchschnittlichen Längen kleiner als der halbe Bohrlochdurchmesser sowie zwei Komponenten eines Klebers und gegebenenfalls einem Blocker.

9. Mittel gemäß Anspruch 8, dadurch gekennzeichnet, daß es zum Verankern von Befestigungselementen in sanierungsbedürftigen Bohrlöchern in Unterlagen aus Holz, Mauerwerk oder Beton ein niedermolekulares Fungizid in einer Menge zwischen 0,25 bis 10 Gew.-% bezogen auf die beiden Komponenten des Klebers, vorzugsweise Rowalin GZ in einer Menge von 0,25 bis 3,5 Gew.-%, enthält.

10. Mittel gemäß Anspruch 8 oder 9, dadurch gekennzeichnet, daß das Mengenverhältnis zwischen dem Gemisch aus Fasern oder Spänen (Feststoffanteil) und den zwei Komponenten des Klebers sowie gegebenenfalls dem Blocker und dem Fungizid (Flüssiganteil) 90 Masse% zu 10 Masse% beträgt.

11. Verwendung von verdichtungsfähigen Gemischen aus hochverschleißfesten Fasern oder Spänen mit durchschnittlichen Längen kleiner als der halbe Bohrlochdurchmesser als Einlage in Zweikomponentenklebern zur Verankerung von Befestigungselementen in Bohrlöchern in Unterlagen aus Holz, Beton, Stahl oder Mauerwerk.

12. Verwendung von verdichtungsfähigen Gemischen gemäß Anspruch 11, wobei dem Zweikomponentenkleber ein niedermolekulares Fungizid zugesetzt ist, zur Verankerung von Befestigungselementen in sanierungsbedürftigen Bohrlöchern in Schwellen von Gleisanlagen und anderen Unterlagen aus Holz, Mauerwerk oder Beton.

## Claims

1. A method for the anchoring of fixing members, especially screws, nails, anchors, clamps and bolts, in boreholes in which
a) the boreholes are first filled with half to three fourths of their volume of a compressible mixture of highly wear-resistant fibers or chips of metals, polymers and/or ceramics with average lengths being smaller than half the diameter of the borehole, optionally followed by adding a blocker, then the two components of an adhesive are introduced successively or simultaneously, and then the remaining part of the required amount of fibers or chips is filled in, or
b) a kneadable composition is prepared from a compressible mixture of highly wear-resistant fibers or chips with average lengths being smaller than half the diameter of the borehole, and the two components of the adhesive, which composition is then pressed into the boreholes;
thereafter, when fixing members without a self-cutting thread are used, a center hole is first formed and then the respective fixing member is inserted and optionally secured.

2. The method according to claim 1, characterized in that boreholes in need of remediation are previously drilled open, cleaned and degreased.

3. The method according to claim 1 or 2, characterized in that a liquid component A with a formulation of aliphatic and cycloaliphatic epoxy resins, mono- and bifunctional reactive diluents and adhesion promoters, and a liquid component B with a formulation of aliphatic and/or cycloaliphatic polyamines, polyamidoamines, Mannich bases and adhesion promoters and optionally accelerators are employed as components A and B of the adhesive.

4. The method according to claim 1 or 2, characterized in that a liquid component C with a formulation of isocyanates with adhesion promoters and conventional additives, and a liquid component D with a formulation of polyhydric alcohols with adhesion promoters and adjuvants are employed as components C and D of the adhesive.

5. The method according to claims 1 to 4, characterized in that a low-molecular weight fungicide is added to components A and B or C and D of the adhesive for the anchoring of fixing elements in boreholes in need of remediation in sleepers or other substrates, such as floors, walls or ceilings, which are made of wood, brickwork or concrete.

6. The method according to claim 5, characterized in that Rowalin GZ, Rodurol F2 or Konservan RT in an amount of from 0.25 to 10% by weight, based on the two components of the adhesive, preferably Rowalin GZ in an amount of from 0.25 to 3.5% by weight, is added as said low-molecular weight fungicide.

7. The method according to claim 1 or 2, characterized in that 1 to 2 drops of a low viscosity diisocyanate or methacrylate is added as the blocker.

8. A composition for the anchoring of fixing members, especially screws, nails, anchors, clamps and bolts, in boreholes for performing the method according to any of claims 1 to 7, consisting of a compressible mixture of highly wear-resistant fibers or chips with average lengths being smaller than half the diameter of the borehole as well as two components of an adhesive and optionally a blocker.

9. The composition according to claim 8, characterized by containing a low-molecular weight fungicide in an amount of from 0.25 to 10% by weight, based on the two components of the adhesive, preferably Rowalin GZ in an amount of from 0.25 to 3.5% by weight, for the anchoring of fixing elements in boreholes in need of remediation in substrates made of wood, brickwork or concrete.

10. The composition according to claim 8 or 9, characterized in that the mass ratio between said mixture of fibers and chips (solid fraction) and said two components of the adhesive and optionally the blocker and the fungicide (liquid fraction) is 90% by mass to 10% by mass.

11. Use of compressible mixtures of highly wear-resistant fibers or chips with average lengths being smaller than half the diameter of the borehole as a reinforcement in two-component adhesives for the anchoring of fixing members in boreholes in substrates made of wood, concrete, steel or brickwork.

12. The use of compressible mixtures according to claim 11, wherein a low-molecular weight fungicide has been added to the two-component adhesive, for the anchoring of fixing members in boreholes in need of remediation in sleepers of track systems and other substrates made of wood, brickwork or concrete.

## Revendications

1. Procédé d'ancrage dans des trous forés d'éléments de fixation, en particulier de vis, de clous, de boulons d'ancrage, de fers de fixation et de goujons, par lequel
a) les trous forés sont d'abord emplis, environ à la moitié ou aux trois quarts, avec un mélange durcissable de fibres à haute résistance à l'abrasion, ou de copeaux métalliques, de polymères et/ou de céramique, avec des longueurs moyennes inférieures au demi diamètre du trou foré, puis, le cas échéant, un agent de blocage est ajouté, et ensuite l'un après l'autre ou simultanément les deux composants de la colle, puis la partie restante de la quantité nécessaire de fibres ou de copeaux sont introduits, ou bien,
b) à partir d'un mélange durcissable composé de fibres ou de copeaux à haute résistance à l'abrasion, avec des longueurs moyennes inférieures au demi diamètre du trou foré, et à partir des deux composants de la colle, est réalisée une masse malaxable, qui est introduite sous pression dans les trous forés,
ensuite, lors de l'utilisation d'éléments de fixation sans filetages autoforants, un trou centré est d'abord préformé, puis chaque élément de fixation est mis en place et est, le cas échéant, fixé.

2. Procédé suivant la revendication 1, caractérisé en ce que des trous forés nécessitant un assainissement sont préalablement alésés, nettoyés et dégraissés.

3. Procédé suivant la revendication 1 ou la revendication 2, caractérisé en ce que, comme composants A et B de la colle, on utilise un composant liquide A comportant une formulation à base de résines époxydes aliphatiques ou cycloaliphatiques, de diluants réactifs mono- ou bi-fonctionnels et d'activateurs d'adhérence, et un composant liquide B comportant une formulation à partir de polyamines de polyamidoamines, de bases de Mannich aliphatiques et/ou cycloaliphatiques, ainsi que d'activateurs d'adhérence et, le cas échéant, d'accélérateurs.

4. Procédé suivant la revendication 1 ou la revendication 2, caractérisé en ce que, comme composants C et D de la colle, on utilise un composant liquide C comportant une formulation d'isocyanates avec des activateurs d'adhérence et des additifs usuels, et, comme composant liquide D, une formulation d'alcools multifonctionnels avec des activateurs d'adhérence et des adjuvants.

5. Procédé suivant l'une des revendication 1 à 4, caractérisé en ce que, pour l'ancrage d'éléments de fixation dans des trous forés nécessitant un assainissement, situés dans des traverses de chemin de fer et autres substructures comme des sols, des murs, ou des plafonds, en bois, en maçonnerie ou en béton, un fongicide de faible masse moléculaire est ajouté aux composants A et B, ou C et D, de la colle.

6. Procédé suivant la revendication 5, caractérisé en ce que, comme fongicide de faible masse moléculaire, il est ajouté, aux deux composants de la colle, de la Rowalin GZ, du Rodurol F2 ou du Konservan RT dans une quantité de 0,25 à 10 % en poids, de préférence de la Rowalin GZ dans une quantité de 0,25 à 3,5 % en poids.

7. Procédé suivant la revendication 1 ou la revendication 2, caractérisé en ce que, comme agent de blocage il est ajouté 1 ou 2 gouttes d'un diisocyanate ou méthacrylate à basse viscosité.

8. Moyen d'ancrage dans des trous forés d'éléments de fixation, en particulier de vis, de clous, de boulons d'ancrage, de fers de fixation et de goujons pour la mise en oeuvre du procédé suivant l'une des revendication 1 à 7, caractérisé par un mélange durcissable composé de fibres ou de copeaux à haute résistance à l'abrasion, avec des longueurs moyennes inférieures au demi diamètre du trou foré, ainsi que de deux composants d'une colle, et, le cas échéant, d'un agent de blocage.

9. Moyen suivant la revendication 8, caractérisé en ce que, pour l'ancrage d'éléments de fixation dans des trous forés nécessitant un assainissement situés dans des substructures en bois, en maçonnerie on en béton, il contient un fongicide de faible masse moléculaire dans une quantité comprise entre 0,25 à 10 % en poids rapporté aux deux composants de la colle, de préférence de la Rowalin GZ dans une quantité allant de 0,25 à 3,5 % en poids.

10. Moyen suivant la revendication 8 ou la revendication 9, caractérisé en ce que la proportion des quantités entre le mélange de fibres ou de copeaux (proportion de matières solides) et les deux composants de la colle et, le cas échéant, l'agent de blocage et le fongicide (proportion en liquides) est dans le rapport de masse de 90 % à 10 %.

11. Utilisation de mélanges durcissables composés de fibres ou de copeaux à haute résistance à l'abrasion, avec des longueurs moyennes inférieures au demi diamètre du trou foré, comme charge dans des colles à deux composants, pour l'ancrage d'éléments de fixation dans des trous forés réalisés dans des substructures en bois, en béton, en acier ou en maçonnerie.

12. Utilisation de mélanges durcissables suivant la revendication 11, en ajoutant à la colle à deux composants un fongicide de faible masse moléculaire, pour l'ancrage d'éléments de fixation dans des trous forés nécessitant un assainissement dans des traverses de chemin de fer et autres supports en bois, en maçonnerie ou en béton.
